# EUROPÄISCHE PATENTSCHRIFT

(11) **EP 0 879 754 B1**
(45) Veröffentlichungstag und Bekanntmachung des Hinweises auf die Patenterteilung: **23.01.2002**
(21) Anmeldenummer: 98108476.7
(22) Anmeldetag: 09.05.1998
(51) Int. Cl.: B62D 17/00, B60G 7/02

(54) **Vorrichtung zum Einstellen der Spur bei Rädern von Kraftfahrzeugen**
Device for adjusting the toe-in of the wheels of motor vehicles
Dispositif pour ajuster l'angle de pincement des roues de véhicules automobiles

(30) Priorität: 24.05.1997 DE 19721752
(43) Veröffentlichungstag der Anmeldung: 25.11.1998
(73) Patentinhaber: DaimlerChrysler AG, 70567 Stuttgart (DE)
(72) Erfinder: Kleinschmit, Einhard, 73732 Esslingen (DE); Reimold, Harald, 75031 Eppingen (DE); Tattermusch, Peter, 73732 Esslingen (DE)

(56) Entgegenhaltungen:
- EP-A- 0 306 046
- DE-A- 3 131 107
- DE-A- 4 115 110
- DE-A- 4 437 661
- US-A- 4 695 073
- PATENT ABSTRACTS OF JAPAN vol. 096, no. 002, 29. Februar 1996 & JP 07 257424 A (SUZUKI MOTOR CORP), 9. Oktober 1995
- PATENT ABSTRACTS OF JAPAN vol. 096, no. 010, 31. Oktober 1996 & JP 08 142907 A (DELTA:KK), 4. Juni 1996

## Beschreibung

Die Erfindung betrifft eine Vorrichtung zum Einstellen der Spur bei Rädern von Kraftfahrzeugen gemäß dem Oberbegriff des Anspruches 1.

Die Vorspur einer Achse wird durch die sogenannte Grundspur, die eingestellte Vorspur bei einer festgelegten Federstellung des Fahrzeuges und den Verlauf bzw. die Neigung der Vorspurkurve im Raum über dem Federweg charakterisiert.

Die Einstellung der Spur erfolgt bei der Herstellung des Fahrzeuges während der Produktion, und sie wird im Verlauf des Lebens des Fahrzeuges routinemäßig im Rahmen der Wartung überprüft, da schon kleine Abweichungen vom Soll das Fahrverhalten, insbesondere aber auch den Reifenverschleiß stark beeinflussen.

Um entsprechende Spurkorrekturen durchzuführen ist es bekannt (JP-A-07257424), die karosserieseitige Lagerstelle eines Radführungslenkers dadurch verstellbar auszuführen, daß das Lenkerlager über einen Tragbolzen zwischen karosserieseitigen Tragschenkeln gehalten wird, die in Fahrzeugquerrichtung verlaufende Langlochführungen für den Tragbolzen aufweisen, so daß der Tragbolzen in Fahrzeugquerrichtung verschieden positioniert werden kann. Diese Positionierung erfolgt mit Hilfe von Exzenterscheiben, die mit dem Tragbolzen drehfest verbunden sind und zwischen Anlageflächen der Tragschenkel passend geführt sind, die in Verstellrichtung, d. h. in Fahrzeugquerrichtung beabstandet zueinander liegen. Sobald durch Verdrehung des Tragbolzens die für die angestrebte Vorspur erforderliche Lage erreicht ist, werden die Exzenterscheiben durch Verspannen des Tragbolzens gegenüber den Tragschenkeln fixiert.

Bei einer weiteren derartigen Lösung (DE 4115110 A1) werden, um die Durchführung des Wartungsschrittes Spurkontrolle bei der Erstinspektion belegbar zu machen, zwischen der Exzenterscheibe und dem Tragschenkel zusätzliche Einstellscheiben angeordnet, die eine Durchführungsbohrung für den Tragbolzen und tragschenkelseitig einen Ansatz aufweisen, der in die Langlochführung des jeweiligen Tragschenkels passend eingreift, so daß über die Einstellscheiben eine Lage des Tragbolzens gegenüber den Tragschenkeln unveränderbar definiert ist. Für die Erstinspektion ist es vorgeschrieben, diese Einstellscheiben zu entfernen, so daß eine Neueinstellung über die Exzenterscheiben vorgenommen werden muß. Die entnommenen Einstellscheiben dienen als Beleg für die Durchführung der Wartung.

Bei einer weiteren bekannten Vorrichtung zur Einstellung der Spur (DE 3200879 A1) sind die karosserieseitigen Tragschenkel einer Lenkerlagerung mit Aussparungen versehen, in die lagezentriert Einstellscheiben einlegbar sind, die Aufnahmebohrungen für den Tragbolzen der Lenkerlagerung enthalten. Verschiedene Positionen des Tragbolzens, und damit auch verschiedene Spureinstellungen sind dadurch zu realisieren, daß Einstellscheiben mit verschiedenen Lochbildern bereitgehalten werden oder daß über die jeweilige Einstellscheibe, wenn diese um 180° verdreht eingesetzt wird, zwei verschiedene Einstellagen definiert werden können. Letzteres setzt voraus, daß das Lochbild zur jeweiligen Drehachse asymmetrisch liegt.

Anstelle der Fixierung der Einstellscheibe durch eine lagegerechte Positionierung in einer Ausnehmung des jeweiligen Tragschenkels ist bei der bekannten Lösung auch vorgesehen, die Einstellscheibe auf ihrer dem Tragschenkel zugewandten Seite mit einem Ansatz zu versehen, der in die gegenüber dem Tragbolzen Übermaß aufweisende Bolzenöffnung im Tragschenkel passend einsetzbar ist, so daß sich für die Einstellscheibe auf diesem Wege eine positionierte Montagelage ergibt, und damit auch entsprechend der Anordnung des Lochbildes für den Tragbolzen in der Einstellscheibe die jeweils gewünschte Positionierung des Tragbolzens.

Bei diesen bekannten Lösungen wird bei der Spureinstellung nur die jeweils eingestellte Vorspur, d. h. die Vorspur bezogen auf eine festgelegte Federstellung verändert, die Neigung der Vorspurkurve im Raum bleibt grundsätzlich aber unbeeinflußt.

Zur Veränderung der Neigung der Vorspurkurve im Raum werden in der Praxis hiervon unabhängige Wege beschritten, und es erfolgt die Veränderung der Neigung der Vorspurkurve dadurch, daß das in der Verbindung des Tragbolzens mit dem Lenker liegende elastische Lenkerlager verstellbar ausgeführt wird derart, daß der Kern und die Außenhülse des Lenkerlagers zueinander exzentrisch und verdrehbar sind. Dies bedeutet zusätzlichen Fertigungsaufwand und zusätzliche Lagervarianten.

Ferner ist aus der DE 31 31 107 A1, die im Oberbegriff des Anspruches 1 berücksichtigt ist, eine Vorrichtung zum Einstellen der Vorspur und der Neigung der Vorspurkurve bekannt, bei der der das Lagerauge tragende Tragbolzen gegenüber den ihn abstützenden Tragschenkeln über zwei voneinander unabhängige Exzentersysteme verstellbar ist, wobei den Exzentern des einen Systemes in Fahrzeugquerrichtung und den Exzentern des anderen Exzentersystemes in Hochrichtung des Fahrzeuges verlaufende Führungen zugeordnet sind und diese Führungen mit den zugehörigen Einstellscheiben auf unterschiedlichen Seiten der Tragschenkel liegen. Damit ist zwar eine Verstellbarkeit sowohl in Fahrzeugquerrichtung, also der Vorspur, wie auch in Hochrichtung, also der Neigung der Vorspur, möglich und gewährleistet, allerdings bei einem nicht unerheblichen Aufwand, zumal die Anordnung von Einstellscheiben beiderseits der Tragschenkel mit dem für ihre Verstellbarkeit notwendigen Zugang auch entsprechendes Bauvolumen beansprucht.

Durch die Erfindung soll demgegenüber eine Vorrichtung der vorgenannten Art dahingehend ausgebildet werden, daß die Vorspur und die Neigung der Vorspurkurve bei geringem Zusatzaufwand in einem Arbeitsgang verändert werden können.

Erreicht wird dies durch die Merkmale des Anspruches 1, wobei durch die Anordnung der in Fahrzeugquerrichtung verlaufenden Langlöcher in den Einstellscheiben in Verbindung mit der Veränderung der Höhenlage der Langlöcher durch Umstellen der Einstellscheiben zwischen zwei um 180° zueinander gedrehten Montagelagen in einfacher Weise eine in ihrer Größe vorgegebene Veränderung der Neigung der Vorspurkurve zu realisieren ist, und in Bezug auf die jeweils gegebene Neigung die Vorspur in gleicher Weise, und ohne wechselseitige Beeinflussung von Neigung und Verlauf, eingestellt werden kann, was im Hinblick auf eine einfache und von Fehlern freie Durchführung von Einstell- und Wartungsarbeiten von Bedeutung ist.

Die jeweilige Verstellung der Vorspur kann in bekannter und gebräuchlicher Weise über exzentrische Verstellscheiben erfolgen, wobei es sich als zweckmäßig erweist, der Einstellscheibe auf ihrer zu den Ansätzen gegenüber liegenden Flachseite Führungsanlagen zuzuordnen, so dass entsprechende Führungsanlagen an den Tragschenkeln entfallen, was den Gesamtaufbau verbilligt.

Die Lage der Langlöcher in den Einstellscheiben und die dadurch in der jeweiligen Montagelage der Einstellscheiben vorgegebene Höhenlage des Tragbolzens, bzw. von dessen Achse kann im Rahmen der Erfindung so gewählt werden, dass in der einen Drehlage der Einstellscheiben die Tragbolzenachse in der Bezugsebene liegt, und lediglich in der anderen Drehlage gegenüber dieser versetzt ist, oder auch derart, dass in beiden Drehlagen der betragsmäßig gleiche Abstand, aber mit entgegengesetzten Vorzeichen zur Bezugsebene gegeben ist.

Konstruktiv läßt sich dies in einfacher Weise dadurch verwirklichen, daß die Einstellscheiben an ihren den Tragschenkeln zugewandten Seiten Ansätze aufweisen, welche in die jeweiligen Tragschenkel hineingreifend an Führungsrändern derselben abgestützt sind. Eine solche Lösung bedeutet einen geringen Aufwand, da die Tragschenkel für die verstellbaren Tragbolzen ohnehin entsprechend große, über das Bolzenmaß hinausgehende Bolzenöffnungen aufweisen müssen und die Ansätze somit in diese Bolzenöffnungen eingreifen und über diese passend aufgenommen werden können.

Weitere Einzelheiten und Merkmale der Erfindung ergeben sich aus den Unteransprüchen. Ferner wird die Erfindung anhand der Zeichnungen noch näher erläutert. Es zeigen:
- Figur 1: eine Draufsicht auf einen in der karosserieseitigen Anlenkung eines Radführungslenkers vorgesehenen Lagerbock mit zugehörigem Radführungslenker in stark schematisierter Darstellung,
- Figur 2: in einer Seitenansicht (Pfeil A) einen Ausschnitt eines Tragschenkels des Lagerbockes gemäß Figur 1 mit der darin vorgesehenen Öffnung für den Tragbolzen,
- Figur 3: eine der Figur 2 entsprechende Darstellung, in der eine Einstellscheibe für den Tragbolzen auf den Tragschenkel aufgesetzt ist,
- Figur 4: einen Schnitt gemäß Linie IV-IV in Figur 3,
- Figur 5: eine der Figur 3 entsprechende Darstellung mit einer anderen, auf den Tragschenkel aufgesetzten Einstellscheibe, und
- Figur 6: einen Schnitt gemäß Linie VI-VI in Figur 5.

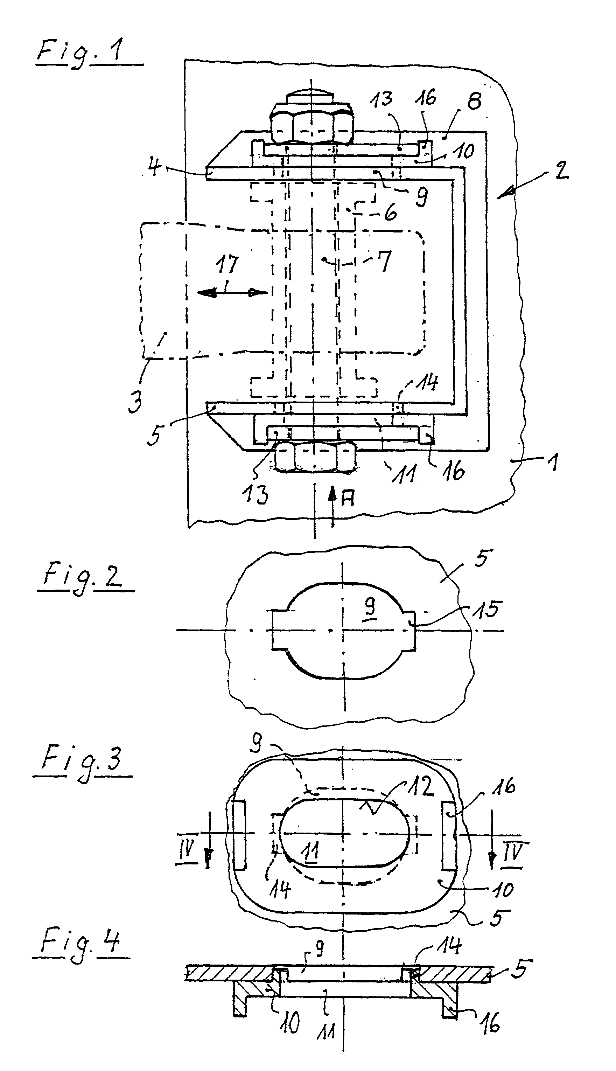

In der Darstellung gemäß Figur 1 ist mit 1 ein Karosserieteil eines hier nicht weiter dargestellten Fahrzeuges bezeichnet, auf dem ein Lagerbock 2 für einen Radführungslenker 3 befestigt ist. Als Karosserieteil kann beispielsweise ein Trägerteil des Fahrzeuges oder aber auch ein mit der Karosserie verbundener Fahrschemel dienen, an dem Radführungslenker angebracht sind.

Der Lagerbock 2 weist in der dargestellten stark schematisierten Ausführung U-förmige Grundform auf und umfaßt Tragschenkel 4, 5, die mit Abstand zueinander liegen und zwischen denen das Lager 6, üblicherweise ein elastisches Lager für den Radführungslenker 3 angeordnet ist. Das Lager 6 ist über einen Tragbolzen 7 gegenüber den Tragschenkeln 4, 5 abgestützt. Gegenüber dem Karosserieteil 1 ist der Lagerbock beispielsweise durch Verschweißen oder dergleichen befestigt, was hier durch den umlaufenden Befestigungsrand 8 angedeutet ist.

Die Tragschenkel 4, 5 weisen für den Tragbolzen 7 Bolzenöffnungen 9 auf, deren Querschnitt größer als der Querschnitt des Tragbolzens 7 ist. Die Bolzenöffnungen 9 sind von Einstellscheiben 10 überdeckt, die in Fahrzeugquerrichtung, und damit in Erstreckungsrichtung des Lenkers 3 verlaufende Langlöcher 11 aufweisen, die mit ihren Längsrändern 12 Führungen für den Tragbolzen 7 bilden, und die ihrerseits auf der von den Schenkeln 4, 5 abgelegenen Seite durch exzentrische Verstellscheiben 13 überdeckt sind. Die Einstellscheiben 10 weisen einerseits, d. h. auf ihrer den Tragschenkeln 4, 5 zugewandten Flachseite Ansätze 14 auf, die im Ausführungsbeispiel in die Bolzenöffnung 9 eingreifen, und zwar im Bereich von in Fahrzeugquerrichtung einander gegenüberliegenden endseitigen Aussparungen 15 der Bolzenöffnung 9. Den Ansätzen 14 bezogen auf die Ebene der Einstellscheibe 10 gegenüberliegend ist diese randseitig mit Führungsanlagen 16 versehen, die in Richtung der Längserstreckung des Langloches 11 einander gegenüberliegend als Vorsprünge ausgebildet sind, an denen die Verstellscheibe 13 ihre Abstützung findet.

Zur Verschiebung des karosserieseitigen Anlenkpunktes des Radführungslenkers 3 in Fahrzeugquerrichtung wird der Tragbolzen 7 im Langloch 11 entsprechend verschoben. Dies geschieht bei Drehung des Tragbolzens 7 über die drehfest mit diesem verbundenen exzentrischen Verstellscheiben 13, da der Tragbolzen 7 senkrecht zur Verschieberichtung 17 über durch die Längsränder 12 des Langloches 11 gebildete Führungen abgestützt ist, so daß eine Drehung des Tragbolzens 7 und der damit verbundenen Verstellscheiben 13 zu einer Querverschiebung des Tragbolzens 7 führt.

Die vorstehende Erläuterung der Erfindung anhand der Figuren 1 bis 4 betrifft deren grundsätzlichen Aufbau und eine Ausgestaltung der Einstellscheibe 10, bei der die Ansätze 14 zur Längsachse des Langloches 11 symmetrisch angeordnet sind, so daß es für die Einstellscheibe 10 bezogen auf deren Einbaulage gegenüber den Tragschenkeln 4 unwesentlich ist, welche Position die Einstellscheibe 10 beim Einstecken der Ansätze 14 in die Aussparungen 15, deren Ränder Stützflächen für die Ansätze 14 bilden, einnimmt.

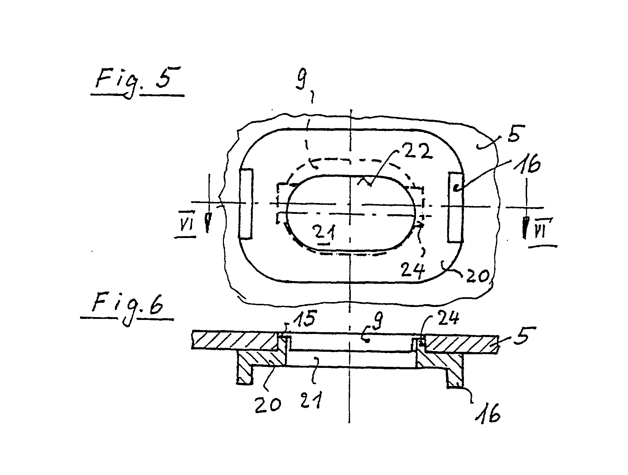

Bei der in den Figuren 5 und 6 dargestellten Ausgestaltung findet eine Einstellscheibe 20 Verwendung, die grundsätzlich gleichen Aufbau aufweist, bei der aber die Ansätze 24 zur Längsachse des Langloches 21 unsymmetrisch ausgebildet sind, so daß bei einer der Figur 2 entsprechenden Lage und Ausgestaltung der Aussparungen 15 der Bolzenöffnung 9 in Verbindung mit einer Einstellscheibe 20 sich für das Langloch 21 und dessen Längsränder 22 als Führungen für den Tragbolzen 7 ein Höhenversatz gegenüber der Anordnung in Figur 3 ergibt.

Wird die Einstellscheibe 20, ausgehend von der Darstellung in Figur 5, um eine bezogen auf die Zeichnungsebene zu dieser senkrechte Achse gedreht, und zwar über 180°, und in dieser Position in Überdeckung zur Bolzenöffnung 9 angeordnet, so ergibt sich eine Verlagerung des Langloches 21 derart, daß die Langlochachse bezogen auf die in Figur 5 dargestellte Schnittebene VI-VI eine Lage oberhalb dieser Schnittebene einnimmt. Durch diese Verlagerung des Langloches 11, dessen Längsränder 12 Führungen für den Tragbolzen 7 bilden, ergibt sich auch eine Verlagerung des Tragbolzens 7 in Höhenrichtung, und damit eine Verstellung des karosserieseitigen Anlenkpunktes des Lenkers 3 in Höhenrichtung, die zu einer Veränderung der Neigung der Vorspurkurve führt.

In den Ausgestaltungen gemäß Figuren 3 und Figur 5 ist jeweils davon ausgegangen, daß die Aussparungen 15 und damit auch die Ansätze 14 bzw. 24 symmetrisch zur eingezeichneten Schnittebene IV-IV bzw. VI-VI liegen. Im Rahmen der Erfindung ist es aber auch möglich, die Aussparungen 15 hierzu höhenversetzt, sei es nach oben oder unten anzuordnen, eine Lösung, die es ermöglicht, das Langloch einmal wie in Figur 3 symmetrisch zur Schnittebene und einmal, wie in Figur 5, versetzt zur Schnittebene über der Bolzenöffnung 9 anzuordnen, so daß es mit einer Einstellscheibe möglich ist, sowohl die Grundeinstellung, hier unterstellt als eine zur Schnittebene symmetrische Lage des Langloches 11 zu realisieren, wie auch eine hierzu höhenversetzte Lage.

In jedem Falle ist es im Rahmen der Erfindung möglich, mit zwei Einstellscheiben wenigstens drei Höhenlagen für das Langloch zu realisieren, so daß mit geringem Aufwand durch die erfindungsgemäße Lösung sowohl die Vorspur wie auch die Neigung der Vorspurkurve eingestellt werden kann.

## Patentansprüche

1. Vorrichtung zum Einstellen der Spur bei Rädern von Kraftfahrzeugen mit einem zwischen karosserieseitigen Tragschenkeln (4, 5) liegenden Lagerauge eines Radführungslenkers (3) und Führung des Lagerauges gegenüber den Tragschenkeln (4, 5) über einen Lagerauge und Tragschenkel (4, 5) durchsetzenden Tragbolzen (7), der zur Verstellung der Vorspur, die für eine einer Konstruktionslage entsprechende Federstellung des Fahrzeuges festgelegt ist, in Hoch- und Querrichtung des Fahrzeuges verstellbar ist und über Bolzenöffnungen (9) der Tragschenkel (4, 5) überdeckende Einstellscheiben (10, 20) in Hochrichtung geführt ist, die ihrerseits über Stützflächen (Aussparungen 15) der Tragschenkel (4, 5) geführt sind,
**dadurch gekennzeichnet,**
**dass** die Einstellscheiben (10, 20) in Fahrzeugquerrichtung verlaufende, in Überdeckung zu den Bolzenöffnungen (9) liegende Langlöcher (11, 21) und Ansätze (14, 24) aufweisen, die den Stützflächen (15) der Tragschenkel (4, 5) zugeordnet asymmetrisch zur die Langlochlängsachse enthaltenden Symmetrieebene liegen und dass zur Verstellung des Tragbolzens (7) in Hochrichtung des Fahrzeuges für die Einstellscheiben (10, 20) und deren Ansätze (14, 24) gegenüber den Stützflächen (Aussparungen 15) der Tragschenkel (4, 5) zwei um 180° zueinander gedrehte Montagelagen vorgesehen sind, in denen der Tragbolzen (7) mit den ihm in den Einstellscheiben (10, 20) zugeordneten Langlöchern (11, 21) bezogen auf eine die Drehachse enthaltende, etwa horizontale Bezugsebene unterschiedliche Höhenlagen einnimmt.

2. Vorrichtung nach Anspruch 1,
**dadurch gekennzeichnet,**
**dass** der Tragbolzen (7) in den beiden um 180° zueinander gedrehten Lagen der Einstellscheibe (20) bezogen auf eine die Drehachse enthaltende, etwa horizontale Bezugsebene nach verschiedenen Seiten dieser Bezugsebene versetzt liegt.

3. Vorrichtung nach Anspruch 1 oder 2,
**dadurch gekennzeichnet,**
**dass** die Ansätze (14, 24) an den den Tragschenkeln (4, 5) zugewandten Seiten der Einstellscheiben (10, 20) vorgesehen und in den jeweiligen Tragschenkel (4, 5) eingreifend an den durch Führungsränder gebildeten Stützflächen abgestützt sind.

4. Vorrichtung nach Anspruch 3,
**dadurch gekennzeichnet,**
**dass** die Ansätze (14, 24) in die Bolzenöffnungen (9) eingreifen, die randoffene Aussparungen (15) als Stützflächen für die Ansätze (14) aufweisen.

5. Vorrichtung nach Anspruch 3,
**dadurch gekennzeichnet,**
**dass** den Ansätzen in den Tragschenkeln randgeschlossene, Stützflächen bildende Aussparungen zugeordnet sind.

6. Vorrichtung nach einem der vorhergehenden Ansprüche,
**dadurch gekennzeichnet,**
**dass** zur Verstellung des Tragbolzens (7) in Querrichtung exzentrische Verstellscheiben (13) vorgesehen sind, die von dem Tragbolzen (7) durchsetzt sind und für die die Einstellscheiben (10, 20) an ihren den Ansätzen (14, 24) gegenüberliegenden Seiten mit Führungsanlagen (16) versehen sind.

## Claims

1. A device for adjusting the tread of wheels on motor vehicles with a bearing eye of a wheel location suspension link (3) lying between load-bearing legs (4, 5) forming part of the body shell and location of the bearing eye in relation to the load-bearing legs (4, 5) by means of a load-bearing bolt (7) which passes through a bearing eye and load-bearing legs (4, 5), can be adjusted both vertically and horizontally in relation to the vehicle in order to adjust the toe-in which is set for a vehicle suspension position corresponding to the design configuration and is moved vertically by means of adjusting disks (10, 20) covering bolt openings (9) in the load-bearing legs (4, 5) which are themselves moved by means of supporting surfaces (recesses 15) in the load-bearing legs (4, 5),
**characterised in that**
the adjusting disks (10, 20) have elongated holes (11, 21) running at right angles to the length of the vehicle which cover the bolt openings (9) and projections (14, 24) which lie asymmetrically to the plane of symmetry containing the longitudinal axis of the elongated holes assigned to the supporting surfaces (15) of the supporting legs (4, 5), and that in order to adjust the load-bearing bolt (7) vertically in relation to the vehicle for the adjusting disks (10, 20) and their projections (14, 24) opposite the supporting surfaces (recesses 15) of the bearing legs (4, 5) two mounting positions, one rotated about 180° in relation to the other, are provided in which the load-bearing bolt (7) and the elongated holes (11, 21) in the adjusting disks (10, 20) assigned to it take up different vertical heights in relation to an approximately horizontal reference plane containing the rotational axis.

2. A device in accordance with claim 1,
**characterised in that**
in both positions of the adjusting disk (20), one rotated about 180° in relation to the other, the load-bearing bolt (7) is offset to both sides of an approximately horizontal reference plane containing the axis of rotation.

3. A device in accordance with claim 1 or 2,
**characterised in that**
the projections (14, 24) are provided on the sides of the adjusting disks (10, 20) facing the load-bearing legs (4, 5) and are supported on the supporting surfaces formed by guide edges, engaging with each of the load-bearing legs (4, 5).

4. A device in accordance with claim 3,
**characterised in that**
the projections (14, 24) engage in the bolt openings (9) which have open-edged recesses (15) as supporting surfaces for the projections (14).

5. A device in accordance with claim 3,
**characterised in that**
closed-edged recesses forming supporting surfaces are assigned to the projections in the load-bearing legs.

6. A device in accordance with one of the preceding claims,
**characterised in that**
transversely excentric adjusting disks (13) are provided for adjusting the load-bearing bolt (7) through which the said load-bearing bolt (7) passes and for which the sides of the adjusting discs (10, 20) opposite the projections (14, 24) are provided with guides (16).

## Revendications

1. Dispositif pour ajuster l'angle de pincement des roues de véhicules automobiles, comportant un oeillet de montage, situé entre des bras porteurs côté carrosserie (4, 5), sur un bras de guidage de roue (3), et un guidage de l'oeillet de montage par rapport aux bras porteurs (4, 5) via un goujon porteur (7) qui traverse l'oeillet de montage et les bras porteurs (4, 5) et qui, pour faire varier le pincement des roues avant qui est fixé pour une position de suspension du véhicule correspondante à une position de construction, est réglable en direction verticale et transversale du véhicule, et qui est guidé en direction verticale via des plaques de réglage (10, 20) recouvrant des orifices de goujon (9) des bras porteurs (4, 5), plaques qui sont guidées à leur tour via des surfaces d'appui (échancrures 15) des bras porteurs (4, 5),
**caractérisé en ce que** les plaques de réglage (10, 20) comprennent des trous oblongs (11, 21), s'étendant en direction transversale du véhicule et situés en superposition avec les orifices de goujon (9), et des talons (14, 24) qui, en association avec les surfaces d'appui (15) des bras porteurs (4, 5), se trouvent de façon asymétrique par rapport au plan de symétrie contenant l'axe longitudinal du trou oblong, et **en ce que** pour déplacer le goujon porteur (7) en direction verticale du véhicule, il est prévu deux positions de montage tournées de 180° l'une par rapport à l'autre à l'opposé des surfaces d'appui (échancrures 15) des bras porteurs (4, 5) pour les plaques de réglage (10, 20) et pour leurs talons (14, 24), positions dans lesquelles le goujon porteur (7) occupe, avec les trous oblongs (11, 21) associés à celui-ci dans les plaques de réglage (10, 20), des positions en hauteurs différentes par rapport à un plan de référence approximativement horizontal contenant l'axe de rotation.

2. Dispositif selon la revendication 1, **caractérisé en ce que**, dans les deux positions tournées de 180° l'une par rapport à l'autre de la plaque de réglage (20), le goujon porteur (7) se trouve décalé sur des côtés différents d'un plan de référence approximativement horizontal contenant l'axe de rotation.

3. Dispositif selon une ou l'autre des revendications 1 et 2, **caractérisé en ce que** les talons (14, 24) sont prévus sur les faces des plaques de réglage (10, 20) orientées vers les bras porteurs (4, 5), et **en ce qu'**ils sont supportés par engagement dans le bras porteur respectif (4, 5) sur les surfaces d'appui formées par les bordures de guidage.

4. Dispositif selon la revendication 3, **caractérisé en ce que** les talons (14, 24) s'engagent dans les orifices de goujon (9) qui présentent des échancrures (15) à bordure ouverte à titre de surfaces d'appui pour les talons (14).

5. Dispositif selon la revendication 3, **caractérisé en ce que** des échancrures à bordure fermée et formant des surfaces d'appui sont associées aux talons dans les bras porteurs.

6. Dispositif selon l'une quelconque des revendications précédentes, **caractérisé en ce que** pour déplacer le goujon porteur (7) en direction transversale, il est prévu des plaques de réglage excentriques (13) qui sont traversées par le goujon porteur (7) et pour lesquels les plaques de réglage (10, 20) sont pourvues d'organes de guidage (16) sur leurs côtés opposés aux talons (14, 24).
